Europäisches Patentamt

European Patent Office

Office européen des brevets

(19)

(11) **EP 0 634 668 B1**

(12) **EUROPÄISCHE PATENTSCHRIFT**

(45) Veröffentlichungstag und Bekanntmachung des Hinweises auf die Patenterteilung:
**01.10.1997 Patentblatt 1997/40**

(51) Int Cl.⁶: **G01S 13/90**

(21) Anmeldenummer: **94110396.2**

(22) Anmeldetag: **04.07.1994**

(54) **Radargerät zur Hinderniswarnung**

Radar apparatus for obstacle warning

Dispositif radar pour l'avertissement d'obstacle

(84) Benannte Vertragsstaaten:
**DE FR GB IT NL SE**

(30) Priorität: **14.07.1993 DE 4323511**

(43) Veröffentlichungstag der Anmeldung:
**18.01.1995 Patentblatt 1995/03**

(73) Patentinhaber: **Daimler-Benz Aerospace Aktiengesellschaft**
**81663 München (DE)**

(72) Erfinder: **Klausing, Helmut, Dipl.-Ing. Dr.**
**D-83043 Bad Aibling (DE)**

(56) Entgegenhaltungen:
- FREQUENZ, Bd.45, Nr.1/2, Januar 1991, Berlin, DE, SS 51-58, XP224370; HELMUT KLAUSING: 'Realisierbarkeit eines Radars mit synthetischer Apertur durch rotierende Antennen (Teil I)'
- FREQUENZ, Bd.45, Nr.3/4, März 1991, Berlin, DE, SS 73-80, XP240531; HELMUT KLAUSING: 'Realisierbarkeit eines Radars mit synthetischer Apertur durch rotierende Antennen (Teil II)'
- FREQUENZ, Bd.45, Nr.5/6, Mai 1991, Berlin, DE, SS 147-154, XP234620; HELMUT KLAUSING: 'Realisierbarkeit eines Radars mit synthetischer Apertur durch rotierende Antennen (Teil III)'

EP 0 634 668 B1

**Beschreibung**

Die Erfindung bezieht sich auf ein Radargerät zur Hinderniswarnung gemäß dem Oberbegriff des Anspruchs 1.

Aus der EP-A 0 406 522 bzw. der DE-PS 39 22 086 ist ein Radargerät mit einem Sender und einem Empfänger sowie einer Antenne zum Senden und Empfangen von Radarimpulsen bekannt, wobei die Antenne am Ende eines rotierenden Armes, beispielsweise eines Hubschrauberrotors oder eines Drehkreuzes oberhalb der Rotorachse, angeordnet ist. Ein solches Radargerät mit synthetischer Apertur auf der Basis rotierender Antennen wird als ROSAR-Gerät bezeichnet. Die Verwendupg eines Drehkreuzes statt der Rotorblätter ändert grundsätzlich nichts am ROSAR-Prinzip, sondern hat lediglich den Nachteil geringerer Lateralauflösung, jedoch den wesentlichen Vorteil, daß die volle synthetische Aperturlänge bereits innerhalb kurzer Entfernungen erreicht wird. Außerdem weist das Drehkreuz eine hohe mechanische Stabilität auf. Ein derartiges Gerät kann in Echtzeitnähe im On-line-Betrieb eingesetzt werden und neben der Kartographie, der Hinderniswarnung oder der Landehilfe auch der Zielaufklärung und der Zielverfolgung dienen. Ein weiteres Anwendungsgebiet liegt in der Flugkörpereinweisung. Bei dem bekannten ROSAR-Gerät wird das Ergebnis für jedes Entfernungsintervall stets durch Korrelation des Empfangssignales mit einer für dieses Entfernungsintervall gültigen Referenzfunktion erhalten.

Der Erfindung liegt die Aufgabe zugrunde, das bekannte ROSAR-Verfahren so auszubauen und zu verbessern, daß es in Echtzeitnähe im On-line-Betrieb eingesetzt werden und neben der Kartographie, der Hinderniswarnung oder der Landehilfe auch der Zielaufklärung, der Zielverfolgung und der Flugkörpereinweisung dienen kann und daß die volle synthetische Aperturlänge bereits innerhalb kurzer Entfernungen erreicht wird.

Diese Aufgabe wird durch die im Anspruch 1 aufgezeigten Maßnahmen gelöst. In den Unteransprüchen sind Ausgestaltungen und Weiterbildungen angegeben und in der nachfolgenden Beschreibung werden Ausführungsbeispiele erläutert. Die Figuren der Zeichnung ergänzen diese Erläuterung. Es zeigen:

Fig. 1      ein Schemabild der ROSAR-Beleuchtungsgeometrie mit dem Drehkreuz oberhalb des Rotors in der Rotorachse,

Fig. 2      ein Diagramm bezüglich des Verlaufs der Winkelauflösung als Funktion des Öffnungswinkels der Antenne in Azimut $\gamma$,

Fig. 3      eine Darstellung der geometrischen Anordnung zur Definition der synthetischen Apertur S,

Fig. 4      ein Diagramm über den Verlauf der Lateralauflösung als Funktion der Entfernung zum Ziel für verschiedene Öffnungswinkel der Antenne in Azimut,

Fig. 5      ein Schemabild bezüglich der Radialauflösungen welche die Länge der Entfernungsintervalle festlegen, wobei im Nahbereich die Radialauflösung größer ist als im Fernbereich,

Fig. 6a      ein Schemabild bezüglich des ausgeleuchteten Bereiches in Azimut, wobei alle Öffnungswinkel gleich groß sind,

Fig. 6b      ein Schemabild bezüglich des ausgeleuchteten Bereiches in Azimut, wobei zwei schwach bündelnde Antennen zur Signalverarbeitung nach dem Prinzip der synthetischen Apertur auf ROSAR-Basis und zwei stark bündelnde Antennen nach dem Prinzip der realen Apertur arbeiten,

Fig. 7a bis 7c      Ausführungsbeispiele für die Beleuchtungsgeometrie in Elevation mit den Öffnungswinkeln der Antenne in Elevation in schematischer Darstellung,

Fig. 7d      ein Ausführungsbeispiel der Kreisringausleuchtung für die Bodenabbildung,

Fig. 8      ein Blockschaltbild eines Prozessors für ein ROSAR-Gerät.

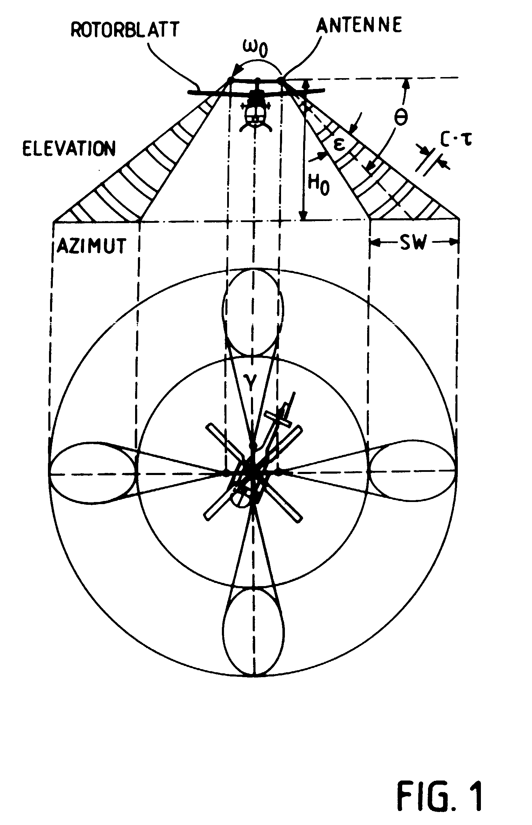

Fig. 1 zeigt schematisch die ROSAR-Beleuchtungsgeometrie mit dem Drehkreuz oberhalb der Rotorachse (nicht maßstäblich).

Durch die in den Armspitzen des Drehkreuzes 110 angebrachten Antennen 111 wird bei schräger Blickrichtung nach unten ein Kreisring ausgeleuchtet, wobei die beleuchtete Streifenbreite vom Öffnungswinkel der Antenne in Elevation $\varepsilon$, dem Depressionswinkel $\theta$ und von der Höhe $H_0$ der Trägerplattform abhängig ist. Bei direkter radialer Abstrahlung, z.B. zur Hinderniswarnung, wird die unmittelbare Umgebung des Hubschraubers beleuchtet. Das zur Bilderzeugung benötigte Dopplerspektrum wird durch Rotation der in den Spitzen der Drehkreuzarme 110 untergebrachten Antennen 111 erzeugt, ohne daß eine translatorische Bewegungskomponente der Trägerplattform nötig ist. Die Rotation der Antenne sorgt für eine Rundumsicht, d.h. ROSAR kann den gesamten Winkelbereich von 360° überdecken. Für den Sende- und Empfangsvorgang wird dabei immer die gleiche Antenne 111 verwendet. Die zur Abtastung notwendigen Sendeimpulse werden während der Drehbewegung mit einer vorgegebenen Pulswiederholfrequenz über die Antenne ausgestrahlt und die Echosignale über die gleiche Antenne empfangen. Die Pulswiederholfrequenz fp ist, wie bei der linearen Antennenbewegung auch, durch die Dopplerbandbreite des Empfangssignals festgelegt. Beim Radargerät handelt es sich hier um ein Impulsradar oder alternativ dazu um ein FM-CW-Radar. Die Signalauswertung und Bilderzeugung soll nach einer gewissen Datenvorverarbeitung in der sich mitdrehenden Sende- und Empfangseinheit dann an Bord des Hubschraubers mittels eines spezifischen ROSAR-Prozessors erfolgen. Durch die Antennenbewegung entlang einer Kreisbahn entspricht dem zeitlichen Abstand $Tp = 1/fp$ zwischen zwei Sendeimpulsen der Winkelbereich $\Delta\alpha = \omega_O/fp$ beim ROSAR, wobei $\omega_O$ die Winkelgeschwindigkeit des Antennenarmes ist. Der beleuchtete Streifen am Boden ist ein Kreisring, weshalb die Signalverarbeitung als Funktion des Drehwinkels $\alpha = \omega_O t$ erfolgt. Die Position des abgebildeten Zieles ist durch die Angabe der radialen Entfernung und des Drehwinkels vollständig bestimmt. Dazu ist es ebenfalls notwendig, die Position der Antenne während der Drehbewegung festzuhalten und jede neue Umdrehung zu markieren.

Bei den bisherigen Untersuchungen zur Realisierbarkeit des ROSAR wurde von einer ebenen Drehbewegung mit konstanter Winkelgeschwindigkeit ausgegangen. Die rotierenden Anne vollführen in der Praxis jedoch von einer idealen Kreisbahn abweichende deterministische und stochastische Bewegungen, die vermessen und als Korrektursignale in den ROSAR-Prozessor eingespeist werden müssen. Durch Kurven- und Vorwärtsflug des Hubschraubers ändert sich weiterhin die Beleuchtungsgeometrie in Elevation und Azimut. Diese Änderung muß ebenfalls im Rahmen der Signalverarbeitung und bei der Darstellung des Radarbildes im Hubschrauber berücksichtigt werden. Im Azimut erfährt das Empfangssignal eine zusätzliche Dopplermodulation infolge einer zusätzlichen Geschwindigkeitskomponente der Trägerplattform.

Das Auflösungsvermögen des vorbeschriebenen Radars ist ein Maß für die Trennbarkeit zweier benachbarter Ziele gleicher Rückstrahlfläche und wird in Azimut und Elevation als Winkel und in radialer Richtung als Entfernung angegeben.

Das Verfahren der synthetischen Apertur nutzt nicht die Bündelung der Antennenkeule zur Lateralauflösung, sondern den während der Beleuchtung eines Zieles zurückgelegten Antennenweg zu einer künstlichen Vergrößerung der Antennenlänge. Die synthetische Apertur entsteht dadurch, daß ein punktförmiges Ziel innerhalb der Keule einer realen Antenne, die sich entlang des Flugweges bewegt, beleuchtet wird und alle Empfangsechos nach Betrag und Phase gespeichert werden. Diesen während der Beleuchtung des Ziels zurückgelegten Flugweg nennt man synthetische Apertur.

Wegen der sich dabei ändernden Entfernung zwischen Antenne und Ziel weist das empfangene Echosignal gegenüber dem Sendesignal eine Dopplerfrequenz-Verschiebung auf. Jedes beleuchtete Ziel ist dann durch seinen charakteristischen Dopplerfrequenzverlauf gekennzeichnet und kann prinzipiell von benachbarten Zielen unterschieden werden. Die Signaltheorie lehrt, daß die bestmögliche Auflösung dann erreicht wird, wenn der Empfänger an das zu erwartende Empfangssignal angepaßt wird. Diese Forderung wird durch ein Optimalfilter erfüllt. Wird dieses Optimalfilter durch einen Korrelator realisiert, so erfolgt beim Radar mit synthetischer Apertur eine Kreuzkorrelation zwischen dem Empfangssignal und einer aus dem Meßablauf zu erwartenden Funktion. Diese Funktion wird Referenzfunktion genannt. Die Referenzfunktion wird aus der Beleuchtungsgeometrie für ein einzelnes Ziel am Boden während des Überstreichens durch die Antenne innerhalb eines vorgegebenen Entfernungsintervalls abgeleitet und die Radialauflösung ist, wie beim herkömmlichen Impulsradar, durch die Impulsdauer bzw. Bandbreite des Sendesignals vorgegeben.

Bei der Lateralauflösung beim ROSAR erfolgt die Antennenbewegung entlang eines Kreisbogens, weshalb die Angabe der Lateralauflösung nicht aus der Theorie des linearen SAR übernommen werden kann. Der für die Abbildung relevante Winkelbereich erstreckt sich dann ungefähr über den Halbkreis der Rotationsebene, wenn der Durchgang des Blattes in Richtung des beleuchteten Zieles den Nullpunkt des Drehwinkels festlegt. Durch die Begrenzung der maximalen Länge der synthetischen Apertur auf den Halbkreis ist leicht einzusehen, daß die Auflösung beim ROSAR im Gegensatz zum linearen SAR weiterhin entfernungsabhängig bleibt.

Die mit dem ROSAR-Verfahren erreichbare Lateralauflösung $\tilde{\Delta x}$ in der Entfernung zum Ziel $R_{G0}$ kann mit der abgeschätzten Winkelauflösung $\tilde{\alpha}_{AZ}$ :

$$\tilde{\alpha}_{AZ} = \frac{\lambda}{5 \cdot L \cdot \sin\left(\frac{\gamma}{2}\right)}$$

errechnet werden zu:

$$\tilde{\Delta x} = \tilde{\alpha}_{AZ} \cdot R_{G0} = \frac{\lambda}{5 \cdot L \cdot \sin\left(\frac{\gamma}{2}\right)} \cdot R_{G0}$$

Dabei ist $\lambda$ die Wellenlänge des Sendesignals, L die Länge des Antennenarmes und $\gamma$ der Öffnungswinkel der Antenne in Azimut.

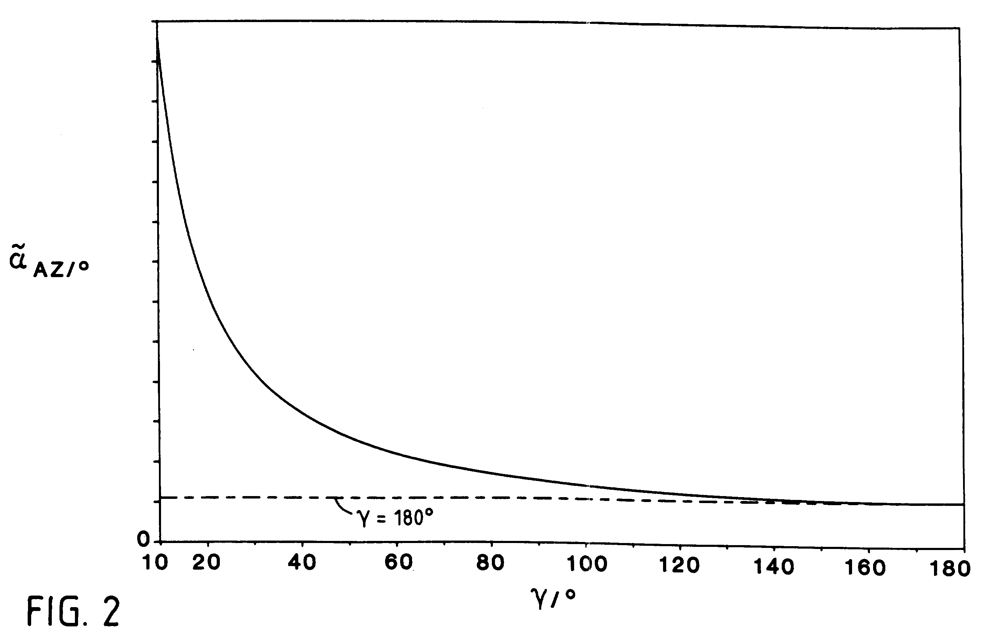

Fig. 2 zeigt den Verlauf der Winkelauflösung $\tilde{\alpha}_{AZ}$ : als Funktion des Öffnungswinkels der Antenne in Azimut $\gamma$.

Bei dieser Abschätzung wird davon ausgegangen, daß bereits die volle Länge der möglichen synthetischen Apertur erreicht wurde, d.h. es gilt:

$$\tilde{S} = \gamma \cdot L.$$

Ist dies nicht der Fall, so gilt:

$$\tilde{S} = \gamma \cdot L \cdot \left(1 - \frac{L}{R_{G0}}\right)$$

Der zur Apertur S gehörende Drehwinkelbereich $\alpha_s$ während der Beleuchtung eines Ziels 0 berechnet sich zu:

$$\alpha_s = \frac{S}{L}$$

Die synthetische Apertur S ist der Weg des Phasenzentrums der Antenne 111 mit dem Öffnungswinkel $\gamma$, welcher während der Beleuchtung eines Zieles O zurückgelegt wird. Der Antennenweg ist beim ROSAR eine Kreisbahn, weshalb die synthetische Apertur S als Kreisbogenausschnitt definiert ist.

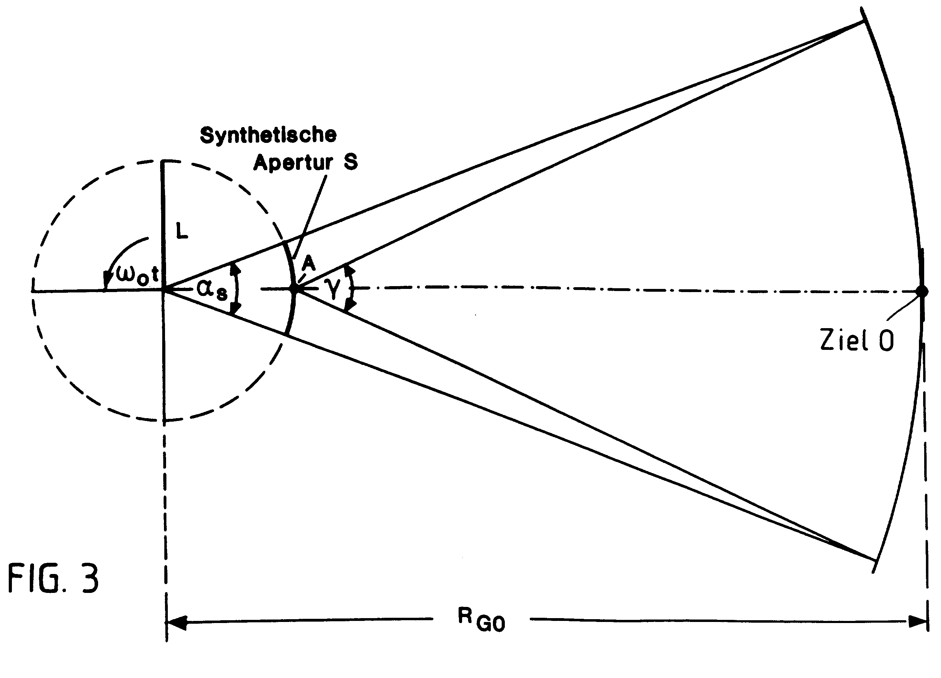

Fig. 3 zeigt die geometrische Anordnung zur Definition der synthetischen Apertur S. Die Länge der synthetischen Apertur S ist vom Öffnungswinkel der Antenne A in Azimut $\gamma$, der Entfernung am Boden $R_{G0}$ zum Ziel O und der Länge des Antennenarmes L abhängig. Dabei wird die Begrenzung der maximalen Apertur auf den Halbkreis der Rotationsebene vorausgesetzt, weil nur derjenige Drehwinkelbereich einen Beitrag zur Lateralauflösung liefert, welcher tatsächlich eine Änderung des Aspektwinkels zum Ziel hervorruft und gleichzeitig auch die Dopplerbandbreite erhöht. Ist die volle Länge der synthetischen Apertur bei der jeweiligen Entfernung zum Ziel noch nicht erreicht, so wird die erreichbare Winkel- bzw. Lateralauflösung entsprechend schlechter. Beim Hinderniswarnradar muß schnell die volle synthetische Aperturlänge S wegen den kurzen Reichweiten und der geforderten hohen Lateralauflösung erreicht werden. Weil die synthetische Aperturlänge S direkt von der Länge des Antennenarmes L (Faktor $L/R_{G0}$) abhängt, ist die Verwendung des Drehkreuzes 110 mit L = 1.5 m durchaus vorteilhaft.

Die überhaupt maximal mögliche synthetische Aperturlänge $S_{max}$ beträgt mit L = 1.5 m als Funktion des Öffnungswinkels der Antenne in Azimut $\gamma$:

$$\gamma = 45°: S_{max}(R_{GO} \to \infty) = 1.18\,m$$

$$\gamma = 70°: S_{max}(R_{GO} \to \infty) = 1.83\,m$$

Bereits an den Enden des Hubschrauberrotorblattes 101 ($R_{G0} \cong 5m$) beträgt die Aperturlänge S mit L = 1.5 m als Funktion des Öffnungswinkels der Antenne in Azimut $\gamma$

$$\gamma = 45°: S_{max}(R_{GO} \cong 5m) = 0,82\,m$$

$$\gamma = 70°: S_{max}(R_{GO} \cong 5m) = 1,28\,m$$

und damit 70 % des Maximalwertes.

Es gilt dann für die Winkelauflösung $\tilde{\alpha}_{AZ}$ mit L = 1.5m und $\lambda = 6.25 \cdot 10^{-3}m$ (48GHz) als Funktion des Öffnungswinkels der Antenne in Azimut $\gamma$:

$$\gamma = 45°: \tilde{\alpha}_{AZ} = 0.12°$$

$$\gamma = 70°: \tilde{\alpha}_{AZ} = 0.08°$$

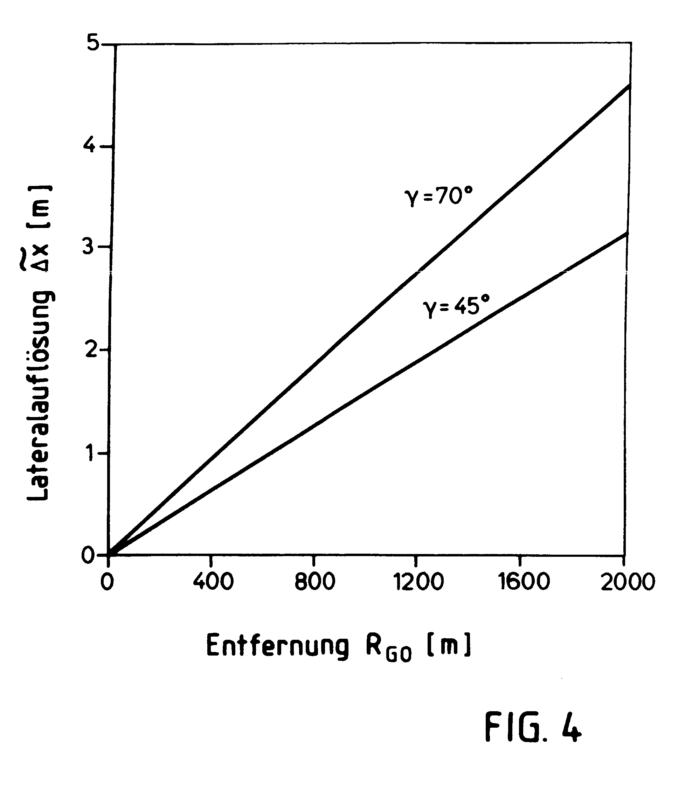

Fig. 4 zeigt beipielhaft den Verlauf der Lateralauflösung $\Delta x$ mit L = 1.5 m und $\lambda = 6.25 \cdot 10^{-3}m$ als Funktion der Entfernung zum Ziel $R_{G0}$ für $\gamma = 45°$ und $\gamma = 70°$: Diese Auflösewerte sind für die Drahtdetektion wahrscheinlich ausreichend, da Drähte nur detektiert, jedoch nicht unbedingt aufgelöst werden sollen. Für den Fall, daß Nebenkeulen die benachbarten Antennen innerhalb des Antennenfächers stören, kann $\gamma$ noch kleiner gewählt werden, weil auch die damit verbundene geringere Lateralauflösung noch ausreicht.

Die Winkelauflösung in Elevation wird durch die Bündelungsfähigkeit der realen Antennenkeule mit dem Öffnungswinkel $\varepsilon$ vorgegeben, d.h. es erfolgt keine Verbesserung der Auflösung nach dem Prinzip der synthetischen Apertur. Ein realistischer Wert für die Bündelung der realen Antennenkeule liegt im Bereich zwischen 2° und 5°.

Die Radialauflösung $\Delta R_{Smin}$ errechnet sich beim Impulsradar mit der komprimierten Sendeimpulsdauer $\tau$, der Lichtgeschwindigkeit c und mit B = 1/$\tau$ zu:

$$\Delta R_{S\,min} = \frac{c \cdot \tau}{2} = \frac{c}{2 \cdot B}$$

Zum Erzielen einer befriedigenden Leistungsbilanz sollte das Verfahren der Pulskompression verwendet werden. Durch die künstliche Vergrößerung der Sendeimpulsbreite bei der Pulskompression entsteht jedoch ein dieser Impulsbreite proportionaler Totbereich, weshalb eine erfolgversprechende Alternative zum Impulsradar das FM-CW-Radar ist. Die Erzeugung der zur Radialauflösung notwendigen Bandbreite B erfolgt bei diesem Radarverfahren durch lineare Modulation der Sendefrequenz.

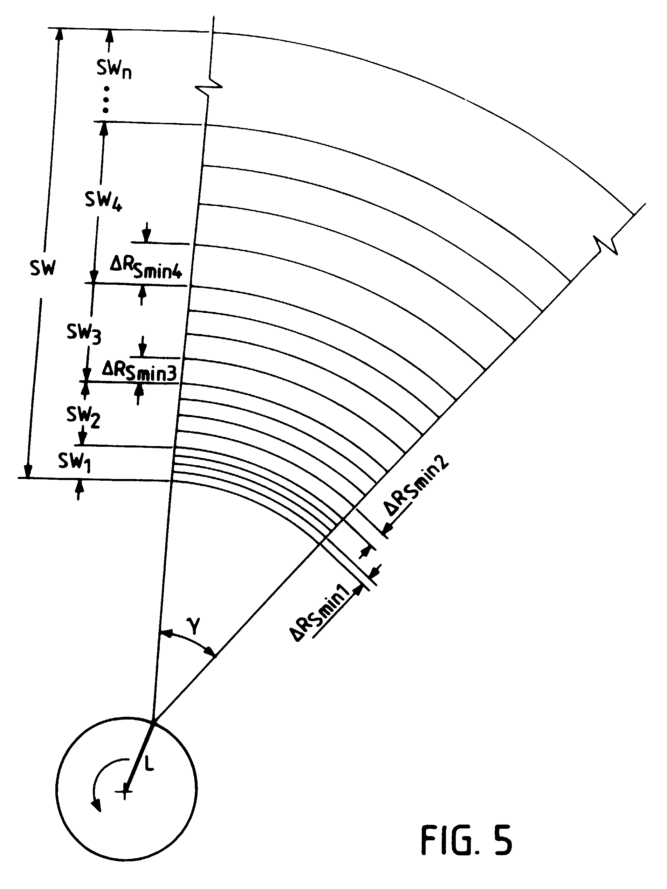

Um eine Signalverarbeitung mit realisierbarem Aufwand zu gewährleisten, wird vorgeschlagen, die Anzahl der Entfernungsintervalle, d.h. Auflösungszellen, so gering wie möglich zu halten. Dies kann durch Variierung der Größe der Entfernungsintervalle erreicht werden, d. h. im Nahbereich werden die Entfernungsintervalle kleiner, d.h. die Radialauflösung besser sein als im Fernbereich. Fig. 5 zeigt das zugehörige Bild mit den jeweiligen Radialauflösungen $\Delta R_{Smini}$ (hier i=1 bis 4), welche die Länge der Entfernungsintervalle festlegen.

Bei der Detektion von Drähten erzeugen hauptsächlich rechtwinklig bzw. in einem Ablagebereich von einigen Grad getroffene Drähte ein deutliches Rückstreusignal, weil Drahthindernisse mit einer Ausdehnung größer als die Wellenlänge wie eine spiegelnde Wand wirken. Ein großer Vorteil des ROSAR-Verfahrens liegt nun darin, daß durch den relativ großen Öffnungswinkel der Antenne in Azimut γ während der Beleuchtung des Drahtes eine rechtwinklige Beleuchtung mit hoher Wahrscheinlichkeit auftritt. Weiterhin beträgt bei einem Drehwinkelbereich von einigen Grad während der Beleuchtung eines Leitungsstückes die beleuchtete Länge dieses Stückes bereits einige Meter. Dann wird dieses Leitungsstück im Empfangssignal nicht mehr als ein einzelnes Punktziel erscheinen, sondern repräsentiert im Radarbild eine Kette von nebeneinanderliegenden Punktzielen, deren Echosignale sich statistisch überlagern. Diese benachbarten Punktziele können im prozessierten Radarbild nach der Korrelation mit den Referenzfunktionen mit Hilfe eines Schwellwertdetektors verbunden werden. Falls die Auflösungszelle hinreichend klein ist, zieht sich dann eine "Leitungslinie" im Radarbild automatisch durch die benachbarten Zellen. Diese Leitungslinie kann auch durch die Verwendung spezieller mathematischer Algorithmen auf dem Radarbild dargestellt werden, d.h. die auf einer Geraden liegenden Punkte werden zur Linie verbunden.

Zur Gesamtkonzeption für ein Hinderniswarnradar auf ROSAR-Basis wird davon ausgegangen, daß das ROSAR sowohl zur Hinderniswarnung, als auch zur Kartographie, d.h. Abbildung des Erdbodens, einsetzbar sein muß. Dazu werden die Antennen entweder so angeordnet, daß sie direkt in radialer Richtung schauen oder auch zum Boden gerichtet sind und damit eine Abbildung des Erdbodens ermöglichen.

Durch die am Ende des rotierenden Armes angebrachten Antennen wird eine kreisbogenförmige synthetische Apertur erzeugt, wobei der beleuchtete Bereich hauptsächlich von den Aptennenparametern in Azimut und Elevation bestimmt wird. Die Randbedingungen der Beleuchtungsgeometrie ergeben sich aus dem Flug- und Landekonzept des Hubschraubers.

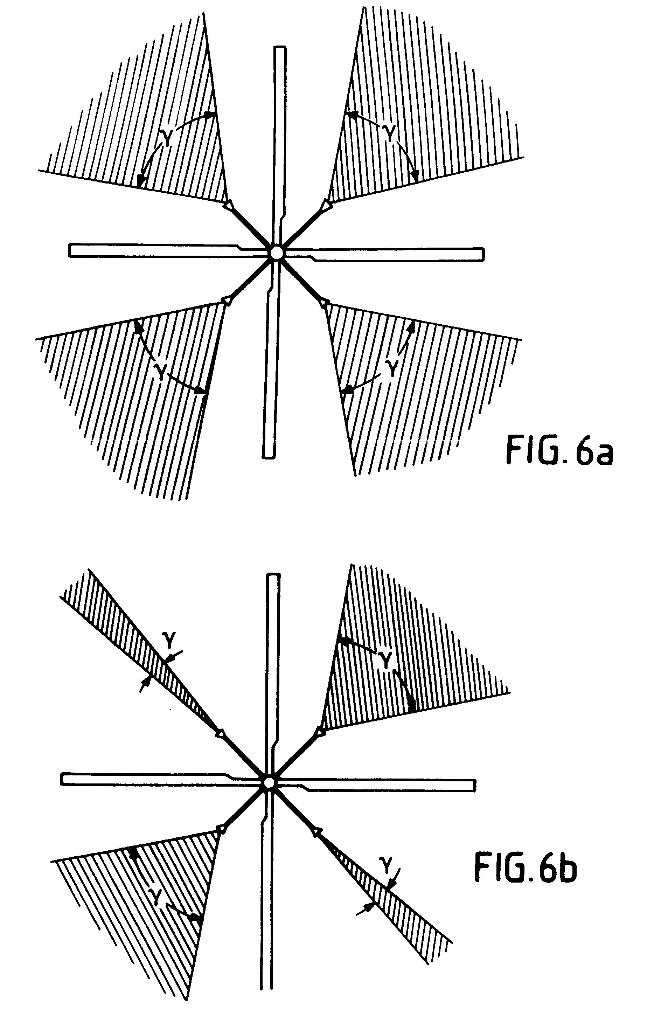

Fig. 6a und 6b zeigen verschiedepe Ausführungsbeispiele hinsichtlich des ausgeleuchteten Bereiches in Azimut mit den Öffnungswinkeln der Antenne 111 in Azimut γ. In Fig. 6a sind alle Öffnungswinkel gleich groß, d.h. die Betriebsparameter zur Signalverarbeitung nach dem ROSAR-Prinzip sind ebenfalls gleich. In Fig. 6b ist beispielhaft eine Ausführung mit zwei schwach bündelnden Antennen 111 zur Signalverarbeitung nach dem Prinzip der synthetischen Apertur auf ROSAR-Basis und zwei stärker bündelnde Antennen 111 nach dem Prinzip der realen Apertur aufgezeigt. Beim Prinzip der realen Apertur wird die Lateralauflösung alleine durch die Bündelungsfähigkeit der Antenne 111 erreicht. Der Nachteil bei diesem Prinzip mit realer Apertur liegt in der eingeschränkten Lateralauflösung. Der Vorteil der realen Apertur besteht darin, daß die Signalverarbeitung erheblich vereinfacht durchgeführt werden kann. Gerade im Nahbereich zur Hinderniswarnung kann die reale Apertur eine hinreichende Auflösung bieten und eingesetzt werden.

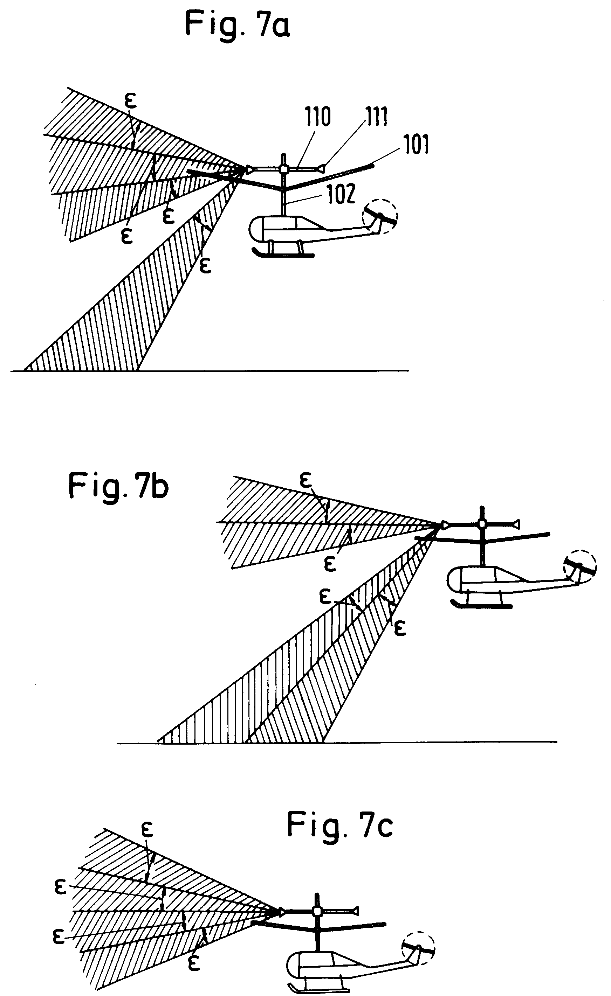

Fig. 7a bis Fig. 7c zeigen Ausführungsbeispiele für die Beleuchtungsgeometrie in Elevation mit den Öffnungswinkeln der Antenne 111 in Elevation ε. Dabei können mehrere Antennen 111 an den Enden eines jeweiligen Dreharmes von Drehkreuz 110 oder Rotorblatt 101 mit verschiedenen Öffnungswinkeln ε und Neigungswinkeln von der Horizontalen (Depressionswinkeln) aus angeordnet werden oder einzelne Antennen 111 verteilen sich auf die Dreharme 101,110. Weiterhin können die Antennen 111 so ausgerichtet werden, daß sie sowohl zur Hinderniswarnung in Hubschrauberflugrichtung schauen oder zum Boden geneigt sind und damit den Erdboden kartographisch abbilden. Die zu den jeweiligen Antennen zugehörigen Sende/Empfangseinheiten und damit das Radardesign hinsichtlich der Signalauswertung können, um Störungen infolge von Interferenzen zu vermeiden, bei verschiedenen Frequenzen arbeiten.

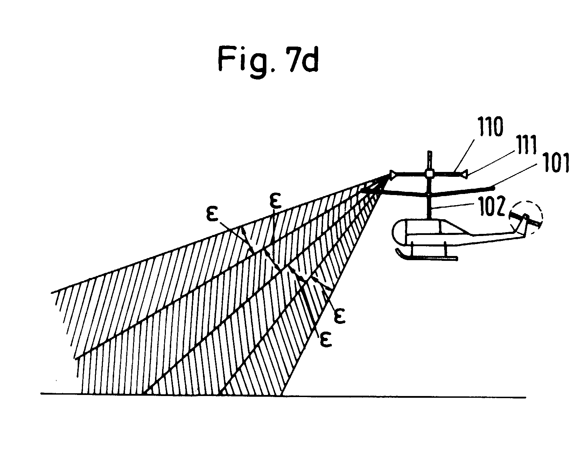

Für die Bodenabbildung besteht darüber hinaus noch die Möglichkeit, durch Variation des Depressionswinkels von Antenne zu Antenne, und damit von Dreharm zu Dreharm, am Boden gestaffelt Kreisringe auszuleuchten, wodurch die jeweilige Signalverarbeitung pro Antenne erheblich beschleunigt wird (Fig. 7d).

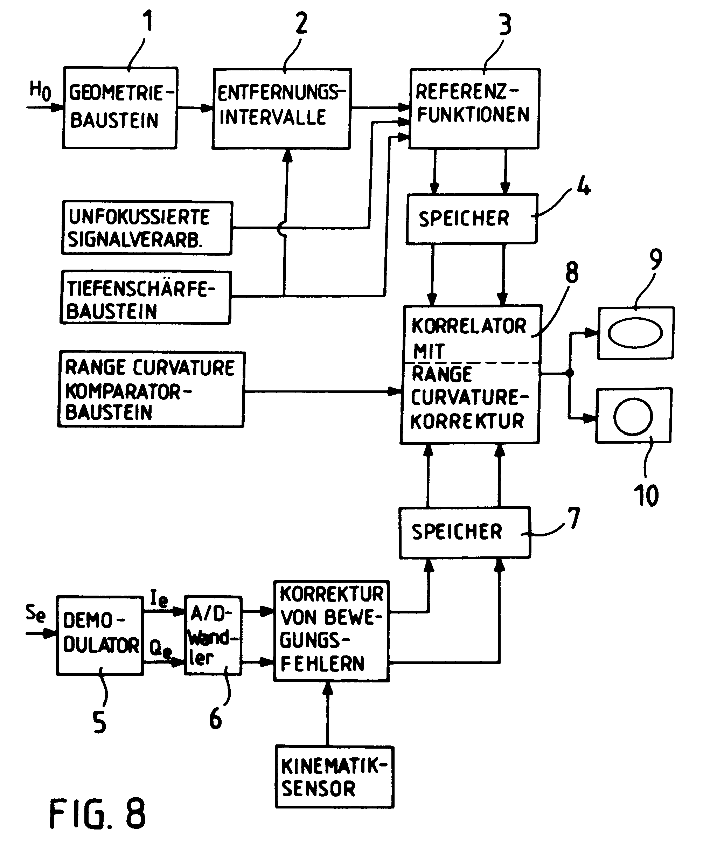

In Fig. 8 ist ein Schaltbild eines Prozessors für ein ROSAR-Gerät gezeigt, wobei in der oberen Hälfte des Blockschaltbildes entsprechend einem ersten Kanal diejenigen Bausteine dargestellt sind, die zur Erzeugung der Referenzfunktionen notwendig sind, und in der unteren Hälfte entsprechend einem zweiten Kanal diejenigen Bausteine, die dem Empfang der am Boden reflektierten Signale dienen.

Im ersten Kanal ist ein Geometriebaustein 1 vorgesehen, der anhand der Höhe $H_0$ der Antenne über Grund und anderer Parameter, insbesondere dem Depressionswinkel, dem Inklinationswinkel und der Länge des Rotorarmes verschiedene Größen und Funktionen berechnet, die einer Prozessorschaltung 2 zum Aufteilen des ausgeleuchteten Gebietes in einzelne Entfernungsintervalle zugeführt werden. Diese Prozessorschaltung 2 ist mit einem Prozessorbaustein 3 verbunden, in dem anhand der Ausgangssignale der Prozessorschaltung 2 die Referenzfunktionen für die einzelnen Entfernungsintervalle berechnet werden. Die für die Korrelation notwendigen Referenzfunktionen werden in einen Speicher 4 übertragen.

Im zweiten Kanal werden die Echosignale $S_e$ einem Quadraturdemodulator 5 zugeführt und in die Inphase- und Quadraturkomponente $I_e$ bzw. $Q_e$ zerlegt. Die beiden Komponenten werden Analog-Digital-Wandlern 6 zugeführt, an deren Ausgang dann diskrete Abtastwerte anliegen. Diese komplexen Echosignale werden dann für die Korrelation in Speicher 7 übertragen. In diesem Speicher 7 werden die Empfangssignale $S_E$ für die jeweiligen Entfernungsintervalle aus den zu diesen Intervallen zugehörigen Echossignalen zusammengefügt. Die jeweils in den Speichern 4 bzw. 7 abgelegten Signale werden synchron einem Korrelator 8 zugeführt und korreliert. Das Korrelationsergebnis wird an einer Anzeige, z.B. einem Monitor 9, dargestellt und/oder weiter einem Auswertegerät 10 zugeführt.

Zusätzlich zu den beschriebenen Prozessorbausteinen sind noch Bausteine zur

- unfokussierten Signalverarbeitung,
- Tiefenschärfeberechnung,
- Range Curvature-Korrektur und
- Korrektur von Bewegungsfehlern

vorgesehen.

Der Kinematik-Sensor zur Korrektur von Bewegungsfehlern besteht im wesentlichen aus verschiedenen Beschleunigungssensoren. Mit Hilfe dieser Beschleunigungssensoren können durch Integration bzw. doppelte Integration Änderungen hinsichtlich der Geschwindigkeit und des Weges gemessen werden. Die zu vermessenden Bewegungsfehler, d.h. Abweichungen von der idealen Kreisbahn, resultieren z.B. aus den Roll- und Nickbewegungen des Hubschraubers und damit als Folge daraus aus Bewegungen des Drehkreuzes mit den in den Armspitzen integrierten Antennen. Weiterhin entstehen Bewegungsfehler durch die Fluggeschwindigkeit des Helikopters, welche ebenfalls korrigiert werden müssen.

Mit Hilfe der Messung auftretender Phasenfehler im Empfangssignal infolge der Abweichungen von der idealen Kreisbahn können die Empfangssignale dergestalt korrigiert werden, als ob sie von der idealen Kreisbahn stammen würden. Nur für den korrigierten Fall, also für die ideale Kreisbahn, erhält man durch Korrelation des Empfangssignals mit der Referenzfunktion, die sich immer für den idealen Fall berechnet, das optimale, der ROSAR-Theorie entsprechende Korrelationsergbnis und damit die Lateralauflösung.

## Patentansprüche

1. Radargerät mit synthetischer Apertur auf der Basis rotierender Antennen zur Hinderniswarnung für Helikopter, mit einem Prozessor für das ROSAR-Gerät, das einen Korrelator (8) enthält zum Korrelieren der Empfangssignale mit Referenzfunktionen, und einem Sender und einem Empfänger sowie Antennen zum Senden und Empfangen von Radarimpulsen, wobei die Antennen (111) am Ende eines rotierenden Armes, beispielsweise eines Hubschrauberrotors oder eines Drehkreuzes (110) oberhalb des Rotors auf der Rotorachse (102) mitrotierend angeordnet sind, **dadurch gekennzeichnet,** daß

    a) für Entfernungen, die außerhalb des für die Hinderniswarnung interessierenden Bereichs liegen - beispielsweise ab 500 m - das Gerät die Signalverarbeitung nach der unfokussierten Methode, d.h. Korrelation mit vereinfachten Referenzfunktionen durchführt und hierzu ein Schwellwertdetektor angeordnet ist, der bei Überschreiten einer vorgesehenen Amplitude automatisch auf die fokussierte Signalverarbeitung umschaltet,

    b) durch Variierung der Größe der Entfernungsintervalle deren Anzahl gering gehalten wird, indem im Nahbereich diese Intervalle kleiner werden und damit die Radialauflösung besser als im Fernbereich ist,

    c) die zu den jeweiligen Antennen (111) gehörenden Sende/Empfangseinheiten hinsichtlich der Signalauswertung bei verschiedenen Frequenzen und bevorzugt im Millimeterwellenbereich arbeiten und

    d) das Prinzip der synthetischen Apertur, wo schwach bündelnde Antennen (111) zugrundeliegen, mit dem Prinzip der realen Apertur, wo möglichst scharf bündelnde Antennen verwendet werden, kombiniert wird.

2. Radargerät nach Anspruch 1, **dadurch gekennzeichnet,** daß ein FM-CW-Radargerät eingesetzt wird, dessen lineare Modulation der Sendefrequenz die zur Erzeugung der Radialauflösung erforderliche Bandbreite aufweist.

3. Radargerät nach Anspruch 1 oder 2, **dadurch gekennzeichnet,** daß die am Ende des rotierenden Armes angebrachten Antennen (111), die eine kreisbogenförmige synthetische Apertur erzeugen, entweder direkt zur radialen Richtung oder direkt zum Boden hin ausgerichtet sind.

4. Radargerät nach einem der Ansprüche 1 bis 3, **dadurch gekennzeichnet,** daß zwei schwach bündelnde Antennen zur Signalverarbeitung nach dem Prinzip der synthetischen Apertur auf ROSAR-Basis mit zwei stärker bündelnden Antennen nach dem Prinzip der realen Apertur auf einem gemeinsamen Träger kombiniert sind.

5. Radargerät nach einem der Ansprüche 1 bis 4, **dadurch gekennzeichnet,** daß die Antennen (111) zur Hinderniswarnung in Hubschrauberflugrichtung und zur Erdbodenkartographie zum Boden hin ausrichtbar angeordnet sind.

6. Radargerät nach einem der Ansprüche 1 bis 5, **dadurch gekennzeichnet,** daß die den jeweiligen Antennen (111) zugeordneten Sende/Empfangseinheiten zur Signalauswertung mit verschiedenen Frequenzen arbeiten und auf dem rotierenden Arm mitdrehend angeordnet sind.

7. Radargerät nach einem der Ansprüche 1 bis 6, **dadurch gekennzeichnet,** daß zur Ausleuchtung gestaffelter Kreisringe am Boden die Depressionswinkel von Antenne (111) zu Antenne (111) eines jeden Armes von Rotorkopf (100) oder Drehkreuz (110) variierbar sind.

8. Radargerät nach einem der Ansprüche 1 bis 7, **dadurch gekennzeichnet,** daß zur Reduzierung der Datenrate noch vor der Signalverarbeitung und Bilderzeugung mittels einer Prozessorschaltung auf dem Rotorarm eine Datenvorverarbeitung durchgeführt wird.

9. Radargerät nach einem der Ansprüche 1 bis 8, **dadurch gekennzeichnet,** daß zur Datenübertragung vom Rotorarm in die Hubschrauberkabine eine elektrische oder optische Kopplungs-Einrichtung angeordnet ist.

10. Radargerät nach einem der Ansprüche 1 bis 9, **dadurch gekennzeichnet,** daß der Prozessor einen ersten Kanal zur Erzeugung der Referenzfunktionen und einen zweiten Kanal zum Empfang der am Boden reflektierten Signale aufweist, wobei im ersten Kanal ein Geometriebaustein (1) und eine Prozessorschaltung (2) zum Aufteilen des ausgeleuchteten Gebietes in einzelne Entfernungsintervalle und einen Prozessorbaustein (3) aufweist, der die Referenzfunktionen für diese Entfernungsintervalle berechnet und einem Speicher (4) zuführt, und im zweiten Kanal ein Quadraturdemodulator (5) für die Echosignale ($S_e$) angeordnet ist, dessen Komponenten ($I_e$ und $Q_e$) einem A/D-Wandler (6) zugeführt und von dort einem Speicher (7) eingegeben werden und die in den Speichern (4, 7) abgelegten Signal synchron in einen Korrelator (8) übertragen werden, dessen Korrelationssignale zur Anzeige einem Monitor (9) und einer Auswerteeinheit (10) eingehen.

**Claims**

1. Radar apparatus with synthetic aperture based on rotary antennae for obstacle warning for helicopters, comprising a processor for the ROSAR unit which includes a correlator (8) for correlation of receive signals with reference functions, and a transmitter and a receiver as well as antennae for transmitting and receiving radar pulses, and the antennae (111) are in a co-rotating manner arranged at the end of a rotary arm, for example a helicopter rotor or a turnstile (110), above the rotor on the rotary axis (102), **characterised in that**

    a: for ranges outside a relevant range for obstacle warning, for example from 500 m onwards, the apparatus carries out signal processing by the unfocused method, i.e. correlation with simplified reference functions for which purpose a threshold value detector is fitted which, on exceeding a specified amplitude, automatically switches over to focused signal processing;

    b: by varying the size of the range intervals, their number is kept low in that these intervals get smaller at close range, thus the radial resolution is better than at long range;

    c: the transmit/receive units associated with the respective antennae (111) perform signal evaluations at different frequencies and preferably in the millimetre-wave range; and

    d: the principle of the synthetic aperture based on weakly focusing antennae (111) is combined with the principle of a real aperture where sharply focusing antennae are used.

2. Radar apparatus according to Claim 1, **characterised in that** an FM/CW radar apparatus is used the linear modulation of the transmit frequency covers the required band width for generating the radial resolution.

3. Radar apparatus according to Claim 1 or 2, **characterised in that** the antennae (111), fitted at the end of the rotary arm and generating an arcshaped synthetic aperture, are oriented either directly to the radial direction or directly towards the ground.

4. Radar apparatus according to one of Claims 1 to 3, **characterised in that** two weakly focusing antennae are combined on a common support for the purpose of signal processing on the principle of the ROSAR based synthetic aperture with two stronger focusing antennae on the principle of the real aperture.

**5.** Radar apparatus according to one of Claims 1 to 4, **characterised in that** the antennae (111) are arranged to be oriented in the helicopter flight direction for the purpose of obstacle warning and towards the ground for the purpose of ground cartography.

**6.** Radar apparatus according to one of Claims 1 to 5, **characterised in that** the respective transmit/receive units associated with respective antennae (111) operate for the purpose of signal evaluation at different frequencies and are arranged to co-rotate with the rotary arm.

**7.** Radar apparatus according to one of Claims 1 to 6, **characterised in that** the depression angles from antenna (111) to antenna (111) of each arm are variable from rotorhead (100) or turnstile (110) for the purpose of illumination of staggered circular rings on the ground.

**8.** Radar apparatus according to one of Claims 1 to 7, **characterised in that,** for the purpose of data rate reduction, data pre-processing is carried out prior to signal processing and image generation by means of a processor circuit on the rotor arm.

**9.** Radar apparatus according to one of Claims 1 to 8, **characterised in that** an electrical or optical coupling unit is provided for data transfer from rotor arm into the helicopter cockpit

**10.** Radar apparatus according to one of Claims 1 to 9, **characterised in that** the processor comprises a first channel for generating the reference functions and a second channel to receive signals reflected on the ground, and the first channel includes a geometry module (1) and a processor circuit (2) for dividing the illuminated area into individual range intervals and a processor module (3) which calculates the reference functions for these range intervals and delivers them to a memory (4), and the second channel includes a quadrature demodulator (5) for the echo signals ($S_e$) the components ($I_e$ and $G_e$) of which are fed to an A/D converter (6) and from there fed to a memory (7), and signals stored in the memories (4, 7) are synchronously transferred into a correlator (8) the correlation signals of which are delivered for display to a monitor (9) and an evaluation unit (10).

**Revendications**

**1.** Appareil radar à ouverture dynamique à base d'antennes rotatives pour la détection d'obstacles destiné à des hélicoptères, comportant un processeur pour l'appareil radar de type ROSAR qui comporte un corrélateur (8) pour la corrélation des signaux de réception avec des fonctions de référence, un émetteur et un récepteur ainsi que des antennes pour émettre et recevoir des impulsions radar, les antennes (111) étant disposées à l'extrémité d'un bras rotatif, par exemple à l'extrémité d'un rotor d'hélicoptère ou d'un croisillon (110), au-dessus du rotor, sur l'axe de rotor, et tournant avec celui-ci, caractérisé par le fait que

a) pour des distances qui se situent en dehors de la zone intéressante pour la détection d'obstacles - par exemple à partir de 500 m - l'appareil procède au traitement du signal selon la méthode non focalisée, c'est-à-dire effectue une corrélation avec des fonctions de référence simplifiées, et qu'il est prévu à cet effet un détecteur de seuil qui, lors d'un dépassement d'une amplitude prévue, commute automatiquement en mode de traitement focalisé du signal,
b) en faisant varier la taille des intervalles de distance, on maintient leur nombre faible, ces intervalles devenant plus petits dans la zone rapprochée et la résolution radiale étant ainsi meilleure que dans la zone éloignée,
c) les unités de réception/émission associées aux différentes antennes (111), du point de vue du traitement du signal, travaillent sous différentes fréquences et de préférence dans la plage des ondes millimétriques et
d) on combine le principe de l'ouverture dynamique, pour lequel on utilise des antennes (111) faiblement focalisantes, avec le principe de l'ouverture réelle, où l'on utilise des antennes très focalisantes.

**2.** Appareil radar selon la revendication 1, caractérisé par le fait que l'on utilise un radar à modulation de fréquence à ondes entretenues (radar FM-CW) dont la modulation linéaire de la fréquence d'émission présente la largeur de bande nécessaire pour produire la résolution radiale.

**3.** Appareil radar selon la revendication 1 ou 2, caractérisé par le fait que les antennes (111) disposées à l'extrémité du bras rotatif, lesquelles antennes produisent une ouverture dynamique en arc de cercle, sont dirigées soit directement dans la direction radiale, soit directement vers le sol.

**4.** Appareil radar selon l'une des revendications 1 à 3, caractérisé par le fait que deux antennes faiblement focalisantes pour le traitement du signal selon le principe de l'ouverture dynamique à base de radars ROSAR sont combinées sur un même support avec deux antennes plus fortement focalisantes utilisant le principe de l'ouverture réelle.

5. Appareil radar selon l'une des revendications 1 à 4, caractérisé par le fait que les antennes (111) sont montées orientables dans la direction de vol de l'hélicoptère pour la détection d'obstacles et vers le sol pour réaliser la cartographie du sol.

6. Appareil radar selon l'une des revendications 1 à 5, caractérisé par le fait que les unités d'émission/réception associées aux différentes antennes (111), pour le traitement du signal, travaillent avec différentes fréquences et sont montées tournantes sur le bras rotatif.

7. Appareil radar selon l'une des revendications 1 à 6, caractérisé par le fait que pour éclairer des zones circulaires échelonnées au sol, les angles de dépression d'antenne (111) à antenne (111) de chaque bras de la tête de rotor (100) ou du croisillon (110) peuvent être modifiés.

8. Appareil radar selon l'une des revendications 1 à 7, caractérisé par le fait que pour réduire le flux de données on procède, avant le traitement du signal et la génération d'images, à un prétraitement des données à l'aide d'un circuit processeur placé sur le bras de rotor .

9. Appareil radar selon l'une des revendications 1 à 8, caractérisé par le fait qu'un dispositif de couplage électrique et optique est prévu pour transmettre les données du bras de rotor au cockpit d'hélicoptère.

10. Appareil radar selon l'une des revendications 1 à 9, caractérisé par le fait que le processeur présente un premier canal pour la production des fonctions de référence et un second canal pour la réception des signaux réfléchis sur le sol, le premier canal comportant un module géométrique (1) et un circuit processeur (2) pour diviser la zone éclairée en intervalles individuels de distance ainsi qu'un module processeur (3) qui calcule les fonctions de référence pour ces intervalles de distances et les transmet à une mémoire (4), un démodulateur (5) en quadrature pour les signaux d'écho ($S_e$) étant disposé dans le second canal, démodulateur dont les composantes ($I_e$ et $Q_e$) sont transmises à un convertisseur A/D et de là sont entrées dans une mémoire (7), et les signaux stockés dans les mémoires (4, 7) étant transmis en synchronisme à un corrélateur (8) dont les signaux de corrélation sont acheminés vers un moniteur (9) et une unité de traitement (10).

FIG. 1

FIG. 2

FIG. 3

EP 0 634 668 B1

FIG. 4

FIG. 5

FIG.6a

FIG.6b

# Fig. 7a

# Fig. 7b

# Fig. 7c

# Fig. 7d

FIG. 8